# EUROPÄISCHE PATENTANMELDUNG

(11) **EP 1 331 499 A1**
(43) Veröffentlichungstag der Anmeldung: **30.07.2003**
(21) Anmeldenummer: 02405044.5
(22) Anmeldetag: 25.01.2002
(51) Int. Cl.: G02B 6/38

(54) **Stecker für eine optische Steckverbindung**

(71) Anmelder: DIAMOND S.A., CH-6616 Losone-Locarno (CH)
(72) Erfinder: De Marchi, Silverio, 6612 Ascona (CH)
(74) Vertreter: Wenger, René

(57) **Zusammenfassung**

Der Stecker (1) verfügt über einen Steckerstift (2, 2'), der im Steckergehäuse (3) verschiebbar gelagert ist. Wenigstens die Steckerstiftstirnseite (5, 5') ist im ungesteckten Zustand in das Steckergehäuse hinter die Gehäusestirnseite (4) zurückgezogen und dadurch geschützt vor äusseren Einflüssen. Der Steckerstift kann über ein Getriebe (6) durch eine Ausfahrbewegung in eine Aktivlage bewegt werden, in welcher die Steckerstiftstirnseite über die Gehäusestirnseite hinausragt. Das Getriebe weist dabei ein Getriebeglied (8) auf, das vorzugsweise durch Einstekken des Steckers in ein Buchsenteil von der Aussenseite des Steckergehäuses aktivierbar ist.

## Beschreibung

Die Erfindung betrifft einen Stecker für eine optische Steckverbindung gemäss dem Oberbegriff von Anspruch 1. Optische Steckverbindungen spielen heute bei der Übertragung von Daten eine immer wichtigere Rolle. Im Gegensatz zu elektrischen Steckern ist bei optischen Steckern der Steckerstift und insbesondere dessen Stirnseite äusserst anfällig auf Verunreinigungen, weil diese die Lichtübertragung beeinträchtigen können.

Es sind grundsätzlich bereits zwei verschiedene Kategorien von optischen Steckern bekannt, bei denen der Steckerstift geschützt im Gehäuse gelagert ist. Gemäss einer ersten Kategorie ragt die Stirnseite des Steckerstifts etwas über die Gehäusestirnseite hinaus, wobei eine wegschwenkbare Schutzklappe dafür sorgt, dass der Steckerstift im ungesteckten Zustand geschützt ist. Ein Beispiel für einen derartigen Stecker ist in der EP-A-570 652 beschrieben. Gemäss einer zweiten Kategorie von Steckern ist die Steckerstirnseite relativ zur Gehäusestirnseite zurückversetzt gelagert, wobei ebenfalls noch eine zusätzliche Schutzvorrichtung vorgesehen sein kann. Ein derartiger Stecker ist beispielsweise in der US-A-4,775,327 beschrieben. Ein Nachteil der genannten ersten Kategorie von Steckern besteht darin, dass die Schutzklappe relativ leicht manuell geöffnet werden kann, auch wenn dies gegen die Kraft einer Schliessfeder erfolgen muss. Bei der zweiten Kategorie von Steckern ist der Steckerstift zwar durch die zurückversetzte Lage bereits relativ gut geschützt. Andererseits ist es nicht möglich, zwei identische Stecker in einer Durchgangsbuchse miteinander zu paaren, weil die Gehäusestirnseiten aneinanderstossen. Das Herstellen von Steckverbindungen mit identischen optischen Steckern spielt jedoch bei der optischen Signalübertragung eine wichtige Rolle.

Es ist daher eine Aufgabe der Erfindung, einen Stecker der eingangs genannten Art zu schaffen, bei dem identische Stecker in einem Buchsenteil miteinander gepaart werden können und bei dem die Stirnseite des Steckerstifts im ungesteckten Zustand nicht zugänglich ist. Diese Aufgabe wird erfindungsgemäss mit einem Stecker gelöst, der die Merkmale im Anspruch 1 aufweist.

Die bewegliche Lagerung des Steckerstifts erlaubt es, diesen im ungesteckten Zustand hinter die Gehäusestirnseite zurückzuziehen. Dort ist er vor unsachgemässen Manipulationen geschützt. Die Ausfahrbewegung über die Gehäusestirnseite hinaus erfolgt über ein Getriebe, welches vorzugsweise durch Einstecken des Steckers in ein Buchsenteil aktivierbar ist. Das entsprechende Getriebeglied innerhalb des Steckers kann dabei derart geschützt angeordnet werden, dass eine manuelle Betätigung nicht möglich ist. Die Ausfahrbewegung des Steckerstifts erlaubt es, dass zwei identischen Stecker in einem Buchsenteil derart gepaart werden können, dass die Steckerstirnseiten direkt aneinanderliegen.

Vorzugsweise ist der Steckerstift unter einer auf das Getriebe einwirkenden Federvorspannung in die Passivlage vorgespannt. Auf diese Weise ist gewährleistet, dass im ungesteckten Zustand der Steckerstift stets in die Passivlage zurückgezogen ist.

Ein besonders hoher Grad an Sicherheit wird erreicht, wenn im Bereich der Steckerstiftstirnseite innerhalb des Steckergehäuses eine Schutzvorrichtung angeordnet ist, die in einer Öffnungsbewegung aus einer Schliessstellung mit verdeckter Steckerstiftstirnseite in eine Öffnungsstellung mit freiliegender Steckerstiftstirnseite bewegbar ist, wobei sich die Schutzvorrichtung in der Passivlage in der Schliessstellung und in der Aktivlage in der Öffnungsstellung befindet. Bei einer derartigen Anordnung wird auch zuverlässig vermieden, dass beispielsweise im ungesteckten Zustand Laserlicht aus dem Steckerstift austreten kann.

Die Öffnungsbewegung der Schutzvorrichtung und die Ausfahrbewegung des Steckerstifts können wenigstens teilweise durch das Getriebe koordiniert sein. Alternativ ist es aber auch denkbar, dass die Schutzvorrichtung völlig autonom von der Ausfahrbewegung arbeitet, beispielsweise durch in die Schliessstellung vorgespannte Blenden, welche beim Ausführen der Ausfahrbewegung weggeschoben werden.

Die Schutzvorrichtung ist besonders vorteilhaft am aktivierbaren Getriebeglied angeordnet, was die Koordination der Bewegung erleichtert.

Besonders vorteilhaft ist zwischen dem Steckergehäuse einerseits und dem Steckerstift, bzw. den dem Steckerstift zugeordneten Bauteilen andererseits eine lösbare Verriegelung vorgesehen, welche durch Betätigung des Getriebegliedes aufhebbar ist. Auf diese Weise kann verhindert werden, dass beispielsweise durch blossen Druck auf das Lichtwellenleiterkabel die Steckerstifte aus dem Steckergehäuse gefahren, bzw. eine allenfalls vorhandene Schutzvorrichtung geöffnet wird. Zum Lösen dieser Verriegelung muss vielmehr das Getriebeglied betätigt werden, wobei die Verriegelung entweder sofort oder erst nach dem Zurücklegen einer bestimmten Wegstrecke gelöst wird. Als besonders zweckmässig hat sich dabei die Verriegelung mit Hilfe einer federnden Sperrklinke erwiesen.

Wenn das Getriebeglied durch eine Öffnung an der Gehäusestirnseite mit einem Stössel aktivierbar ist, können Öffnung und Stössel so dimensioniert werden, dass eine manuelle Betätigung des Getriebeglieds unmöglich ist. Eine derartige Anordnung ist ausserdem kindersicher, weil die Öffnungsfunktion auch durch Tasten an der Gehäuseaussenseite nicht erkennbar ist.

Besonders zweckmässig ist das aktivierbare Getriebeglied, ein in Einsteckrichtung linear verschiebbarer Schlitten, der durch einen Stössel am Buchsenteil aktivierbar ist. Auf diese Weise kann die zum Einstecken des Steckers erforderliche Einsteckkraft optimal zur Betätigung des Getriebes umgesetzt werden.

Die Schutzvorrichtung kann wenigstens eine schwenkbar am Schlitten gelagerte Schutzklappe sein, die im Verlauf der Schlittenbewegung in einer Steuerbahn geführt ist. Die Steuerbahn gewährleistet eine zuverlässige Funktion der Schutzklappe in direkter Abhängigkeit von der Schlittenbewegung. Andere Schutzvorrichtungen wie z.B. Blenden aus flexiblem Material wären aber denkbar. Die Schutzvorrichtung könnte beispielsweise auch als Irisblende ausgebildet sein, wie bei einer fotografischen Kamera.

Der Stecker kann als Duplexversion mit zwei parallelen Steckerstiften ausgebildet sein, zwischen denen der Schlitten geführt ist, wobei am Schlitten zwei Schutzklappen gegensinnig schwenkbar gelagert sind. Das erfindungsgemässe Prinzip lässt sich aber auch an Simplexversionen oder gar an Steckern mit mehr als zwei Steckerstiften realisieren.

Das Getriebe ist vorteilhaft ein Zahnstangen-/Zahnradgetriebe. Damit lassen sich auf kleinstem Raum sehr präzise Bewegungen übertragen. Für die Bewegung des Steckerstifts sind aber grundsätzlich beliebige andere Getriebearten denkbar. So könnte es sich auch um eine Hebelgetriebe oder um ein Zugmittelgetriebe handeln.

Das Zahnrad-/Zahnstangengetriebe lässt sich besonders einfach realisieren, wenn am Steckergehäuse ein Zahnrad gelagert ist, das einerseits mit einer ersten Zahnstange am aktivierbaren Getriebeglied und andererseits mit einer zweiten Zahnstange an einer dem Steckerstift zugeordneten Stifthalterung in Eingriff bringbar ist. Zur Koordination der Kinematik zwischen Öffnungsbewegung und Ausfahrbewegung kann dabei die erste Zahnstange derart dimensioniert sein, dass sie erst nach einer vorbestimmten Linearbewegung mit dem Zahnrad kämmt. So kann beispielsweise die Klappe der Schutzvorrichtung bereits eine Öffnungsbewegung ausführen, während der Steckerstift zunächst noch in der Passivlage verbleibt. Alternativ wäre es aber auch denkbar, dass das Zahnrad Zahnradabschnitte mit unterschiedlichen Teilkreisdurchmessern aufweist, wobei jeder der Abschnitte mit einer der beiden Zahnstangen kämmt. Auf diese Weise kann die Schlittenbewegung so übersetzt werden, dass sich die Klappen der Schutzvorrichtung und die Steckerstifte von Anfang an bewegen und am Ende der Bewegung die korrekte Lage einnehmen.

Eine gleichmässige Verteilung der Getriebekräfte kann erreicht werden, wenn im Steckergehäuse auf beiden Seiten der beiden parallelen Steckerstifte an einer Duplexversion ein Zahnrad gelagert ist und wenn jedes Zahnrad mit je einer ersten und mit je einer zweiten Zahnstange in Eingriff bringbar ist, wobei die ersten und zweiten Zahnstangen bezogen auf eine durch die Drehachse der Zahnräder und parallel zu den Steckerstiften verlaufenden Ebene jeweils wechselseitig angeordnet sind.

Der Steckerstift ist vorteilhaft seinerseits unter axialer Federvorspannung begrenzt verschiebbar in einer Stifthalterung gelagert, welche direkt oder indirekt im Steckergehäuse geführt ist. Die axiale Federvorspannung des Steckerstifts stellt sicher, dass auch bei ungünstiger Toleranzpaarung oder bei Zug am Kabel die Lichtübertragung im gesteckten Zustand nicht unterbrochen wird.

Mit einem erfindungsgemässen Stecker kann auf unterschiedliche Weise eine optische Steckverbindung hergestellt werden. Das dazugehörige Buchsenteil weist vorteilhaft ein Betätigungselement auf, das beim Einstecken des Steckers mit dem aktivierbaren Getriebeglied zusammenwirkt, wobei es sich bei diesem Betätigungselement um wenigstens einen Stössel handeln kann. Im Buchsenteil bzw. in der darin gelagerten Buchse können von zwei Seiten her zwei gleichartige Stecker miteinander gepaart werden. Es ist aber auch denkbar, dass das Buchsenteil als Receptacle ausgebildet ist, in dem ein Steckerstift mit einem aktiven optischen Element gepaart wird. Das Buchsenteil ist vorteilhaft mit einem lösbaren Verriegelungsmittel versehen, das zur Sicherung des Steckers im eingesteckten Zustand mit dem Stecker zusammenwirkt. Beim Verriegelungselement kann es sich um eine Sperrklinke handeln, welche hinter einer Sperrleiste am Stecker einrastbar ist, wobei die Sperrklinke durch Zug an einem Aussengehäuse am Stekker nach dem Push-Pull Prinzip lösbar ist.

Weitere Vorteile und Einzelmerkmale der Erfindung ergeben sich aus der nachfolgenden Beschreibung von Ausführungsbeispielen und aus den Zeichnungen. Es zeigen:
- Figur 1: eine perspektivische Darstellung der Einzelteile eines Steckergehäuses mit Getriebeteilen,
- Figur 2: die Einzelteile gemäss Figur 1 im teilweise montierten Zustand,
- Figur 3: eine perspektivische Darstellung der Einzelteile einer Stifthalterung für den Stecker gemäss Figur 2,
- Figur 4: die Stifthalterung gemäss Figur 3 im montierten Zustand,
- Figur 5: eine perspektivische Darstellung eines Steckers gemäss Figur 2 vor und nach dem Aufsetzen eines Entriegelungsschiebers,
- Figur 6: eine perspektivische Darstellung eines fertig montierten Steckers,
- Figur 7: der Stecker gemäss Figur 6 im aufgeschnittenen Zustand,
- Figur 8: ein teilweise aufgeschnittener Stecker vor dem Einstekken in ein Buchsenteil,
- Figur 9: die Bewegung der Schliessklappen beim Einstecken,
- Figur 10: die Bewegung der Schliessklappen beim Ausstecken,
- Figur 11a: die Draufsicht auf einen teilweise geöffneten Stecker unmittelbar beim Beginn der Einsteckbewegung,
- Figur 11b: den Stecker gemäss Figur 11a in einem Teilschnitt durch die optische Achse,
- Figur 12a: den Stecker gemäss Figur 11a in einem Zwischenstadium der Einsteckbewegung,
- Figur 12b: den Stecker gemäss Figur 12a in einem Teilschnitt durch die optische Achse,
- Figur 13a: den Stecker gemäss Figur 12a im eingesteckten Zustand,
- Figur 13b: den Stecker gemäss Figur 13a in einem Teilschnitt durch die optische Achse,
- Figur 14: ein Bewegungsdiagramm der einzelnen Steckerteile beim Einsteckvorgang,
- Figur 15: ein Bewegungsdiagramm der einzelnen Steckerteile beim Aussteckvorgang,
- Figur 16: ein Schnitt durch ein alternatives Ausführungsbeispiel eines Steckers vor dem Einstecken und
- Figur 17: der Stecker gemäss Figur 16 nach dem Einstecken.

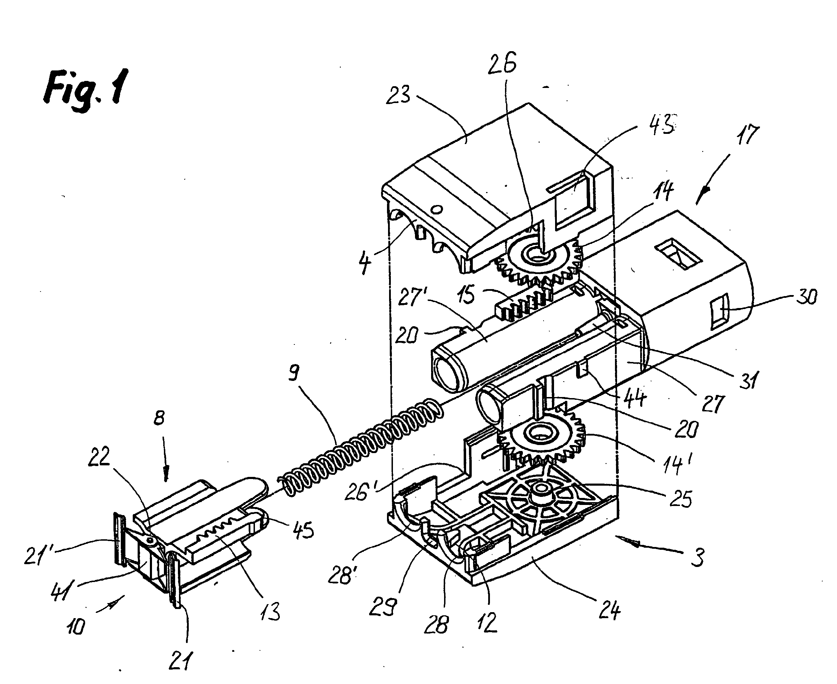

Wie in Figur 1 dargestellt, besteht ein insgesamt mit 3 bezeichnetes Steckergehäuse aus einem Gehäuseoberteil 23 und einem Gehäuseunterteil 24, wobei diese Gehäuseteile mittels einer Schnappverbindung zusammengesetzt werden können. An der Gehäusestirnseite 4 sind zwei kreisförmige Steckeröffnungen 28, 28' und eine etwa rechteckige Stösselöffnung 29 angeordnet. Auf beiden Seiten des Steckergehäuses ist je eine Einrastöffnung 26, 26' vorgesehen und im Gehäuseoberteil 23 ist auf einer Seite eine Stützklinke 43 in die Seitenwand integriert. In der Abbildung nur am Gehäuseunterteil 24 sichtbar, sind hinter den beiden Steckeröffnungen 28, 28' ausserdem Steuerbahnen 12 angeordnet. Diese Steuerbahnen sind aber auch am Gehäuseoberteil 23 vorhanden. Ebenfalls an beiden Gehäuseteilen ist je eine Zahnradnabe 25 angeordnet, auf welcher ein Zahnrad 14 bzw. 14' frei drehbar gelagert ist.

Ein insgesamt mit 8 bezeichneter Schlitten ist an seiner Stirnseite mit einer Schutzvorrichtung 10 bestehend aus den beiden Klappen 21, 21' versehen. Diese sind mit einem Stift 22 an der Stirnseite angelenkt und in der Steuerbahn 12 geführt. Der Schlitten 8 verfügt über zwei Zahnstangen, nämlich eine Zahnstange 13 auf der oberen Schlittenebene und einer hier nicht sichtbaren, diametral gegenüberliegenden Zahnstange auf der unteren Schlittenebene. Die Zahnstange 13 ist an ihrem freien Ende 45 mit einem Wulst versehen, der mit der Stützklinke 43 zusammenwirkt. Die Schlittenstirnseite 41 ist als etwa rechteckige Fläche ausgebildet, welche im eingebauten Zustand hinter der Stösselöffnung 29 liegt.

Ein insgesamt mit 17 bezeichnetes Stiftgehäuse ist linear verschiebbar im Steckergehäuse 3 gelagert. Das Stiftgehäuse verfügt über zwei parallele Hülsen 27, 27', die der Aufnahme der Stekkerstifte dienen. An beiden Hülsen ist im Bereich der Einrastöffnungen 26, 26' je eine Sperrleiste 20, 20' angeordnet. An der Hülse 27 ist ausserdem eine Stütznocken 44 angeordnet, der ebenfalls mit der Stützklinke 43 zusammenwirkt. Am rückwärtigen Abschnitt des Stiftgehäuses 17 sind auf beiden Seiten Einrastöffnungen 30 vorgesehen.

Auf der Hülse 27' ist eine Zahnstange 15 angeordnet, die mit dem Zahnrad 14 kämmt. Auf die gleiche Weise ist unterhalb der Hülse 27 eine weitere Zahnstange angeordnet, die mit dem Zahnrad 14' kämmt. Die beiden einander zugewandten Seiten der Hülsen 27 und 27' sind halbkreisförmig ausgebildet, wobei der Schlitten 8 korrespondierende konkave Ausnehmungen aufweist, so dass er zwischen den beiden Hülsen geführt wird.

Eine Schraubendruckfeder 9 ist an einem Dorn 31 zentriert und presst den Schlitten 8 und das Stiftgehäuse 17 auseinander.

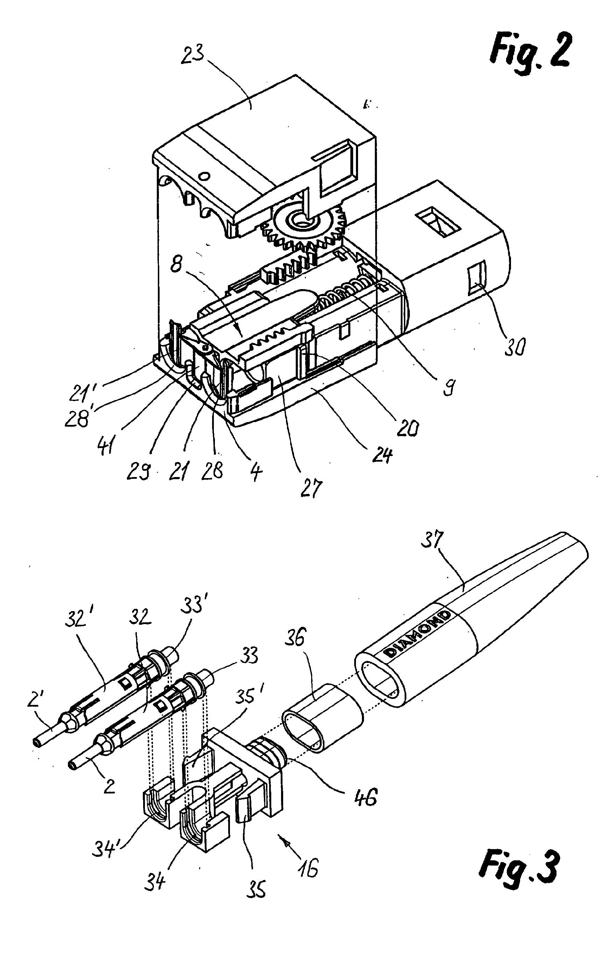

In Figur 2 sind die Einzelteile gemäss Figur 1 bereits in teilweise montiertem Zustand dargestellt. Lediglich das Gehäuseoberteil 23 ist noch nicht mit dem Gehäuseunterteil 24 verbunden. Die Schlittenstirnseite 41 wird von innen her gegen die Gehäusestirnseite 4 gepresst. Die beiden Steckeröffnungen 28, 28' sind durch die beiden Klappen 21, 21' auf der Innenseite verschlossen.

Figur 3 zeigt eine Stifthalterung 16, die zwei parallele Aufnahmen 34, 34' aufweist. In diese Aufnahmen können die beiden hülsenartigen Stiftlager 32, 32' eingesetzt werden und zwar am hinteren Abschnitt an einem Kragen 33 bzw. 33'. Die eigentlichen Steckerstifte 2, 2' sind in den Stiftlagern 32, 32' unter Federvorspannung axial verschiebbar gelagert. Einzelheiten eines derartigen Stiftlagers sind beispielsweise in der EP-A-1 115 014 beschrieben.

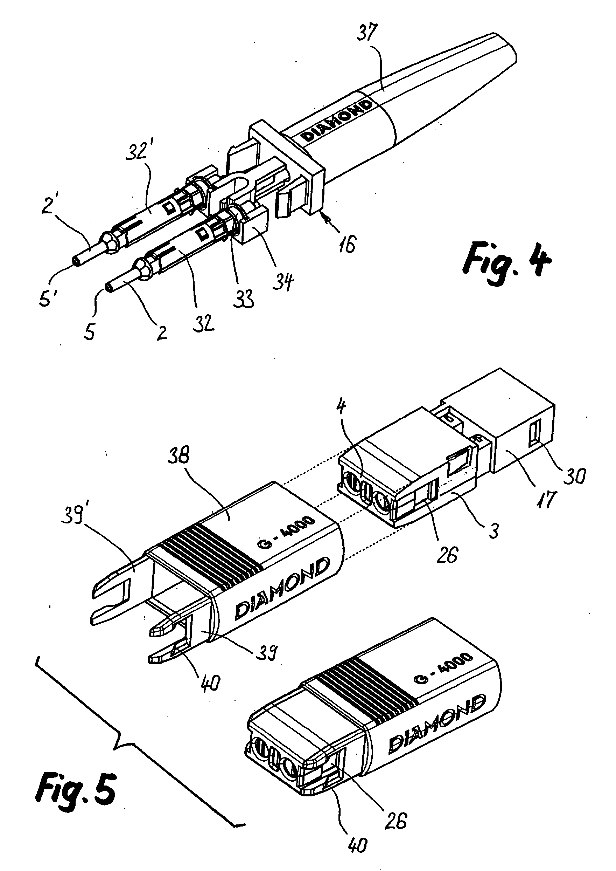

An einer Kabeleintrittsseite 46 ist an der Stifthalterung eine Manschette 36 und ein Knickschutz 37 angeordnet, der über die Manschette schiebbar ist. Den Aufnahmen 34, 34' zugewandt ist ein Sperrklinkenpaar 35, 35' an der Stifthalterung angeordnet. Figur 4 zeigt den eingebauten Zustand der Stiftlager 32, 32' mit aufgesetztem Knickschutz 37.

In Figur 5 ist das geschlossene Steckergehäuse 3 gemäss Figur 2 dargestellt. Zum Lösen der Verriegelung in einem Buchsenteil ist ein Entriegelungsschieber 38 vorgesehen, der über das Steckergehäuse 3 geschoben wird und der dort derart fixiert ist, dass er zum Steckergehäuse 3 eine Relativbewegung in Axialrichtung ausführen kann. An den Seitenwangen 39, 39' sind Rampen 40 angeordnet. Diese liegen in Einsteckrichtung gesehen unmittelbar nach den Einrastöffnungen 26, 26'.

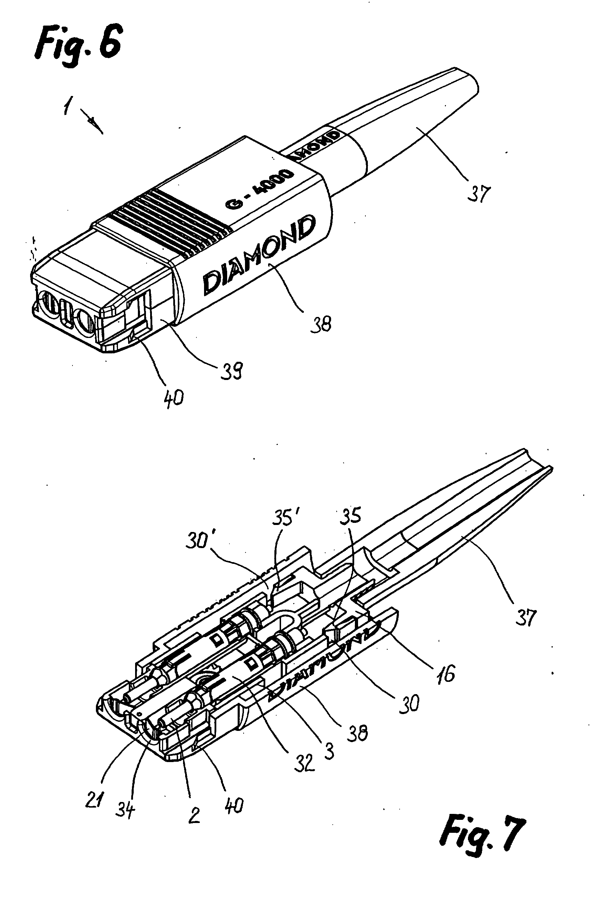

Die Figuren 6 und 7 zeigen den vollständig montierten Zustand des Steckers 1, wobei jetzt auch die Stifthalterung 16 in das Stiftgehäuse 17 eingerastet ist. Die Sperrklinken 35, 35' greifen dabei in die Einrastöffnungen 30, 30'.

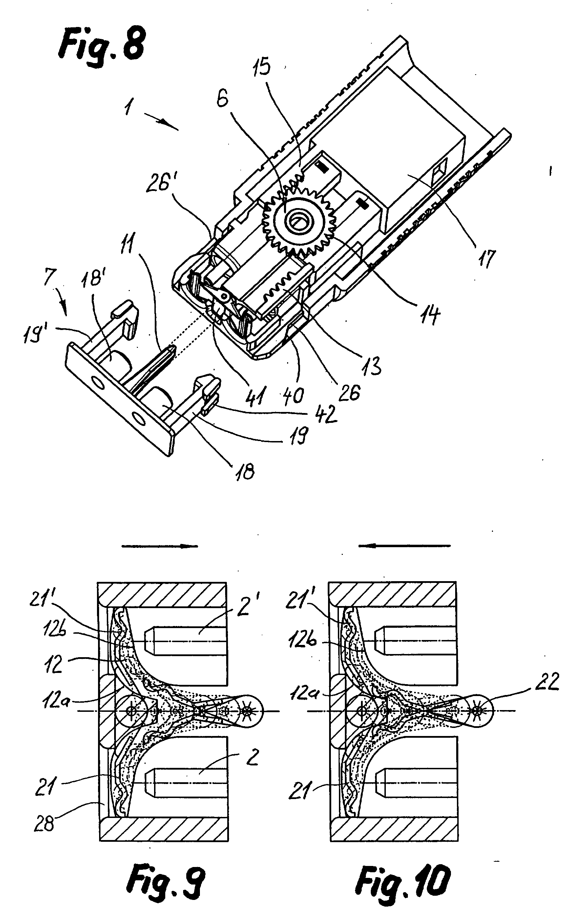

Figur 8 zeigt die Situation am Stecker 1 bei abgehobenem Gehäuseoberteil 23 kurz vor dem Einstecken in ein insgesamt mit 7 bezeichnetes Buchsenteil. Das Buchsenteil verfügt über Aufnahmebuchsen 18, 18' für die Steckerstifte. Zwischen den beiden Buchsen ist ein Stössel 11 angeordnet, der über die Buchsen hinausragt und der gegen die Schlittenstirnseite 41 gerichtet ist. Das Buchsenteil 7 ist ausserdem mit Sperrklinken 19, 19' versehen, welche in die Einrastöffnungen 26, 26' am Stecker eingreifen können. Auf der Aussenseite dieser Sperrklinken und jeweils auf der Ebene der Rampen 40 sind Entriegelungsnocken 42 angeordnet.

Wie am Stecker 1 erkennbar ist, befindet sich das insgesamt mit 6 bezeichnete Getriebe in einer Ruhelage, in welcher das Zahnrad 14 nur mit der zweiten Zahnstange 15 kämmt, welche dem Stiftgehäuse 17 zugeordnet ist. Dagegen befindet sich die erste Zahnstange 13 in der Passivlage noch ausserhalb einer Eingriffsposition mit dem Zahnrad.

Die Figuren 9 und 10 zeigen die Lage der Klappen 21, 21' in den jeweiligen Endpositionen und zwar in Figur 9 beim Einstecken und in Figur 10 beim Ausstecken. Die Klappen führen dabei eine Schwenkbewegung von etwas weniger als 90° aus. Sie gleiten dabei in der Steuerbahn 12 und zwar je nach Bewegungsrichtung entweder entlang der Steuerbahnkulisse 12a oder 12b.

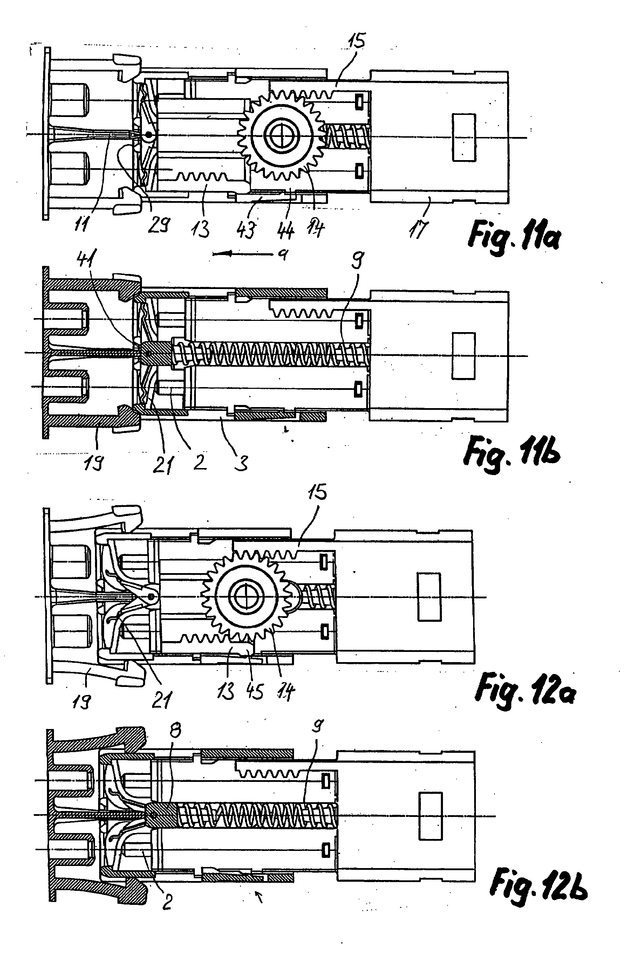

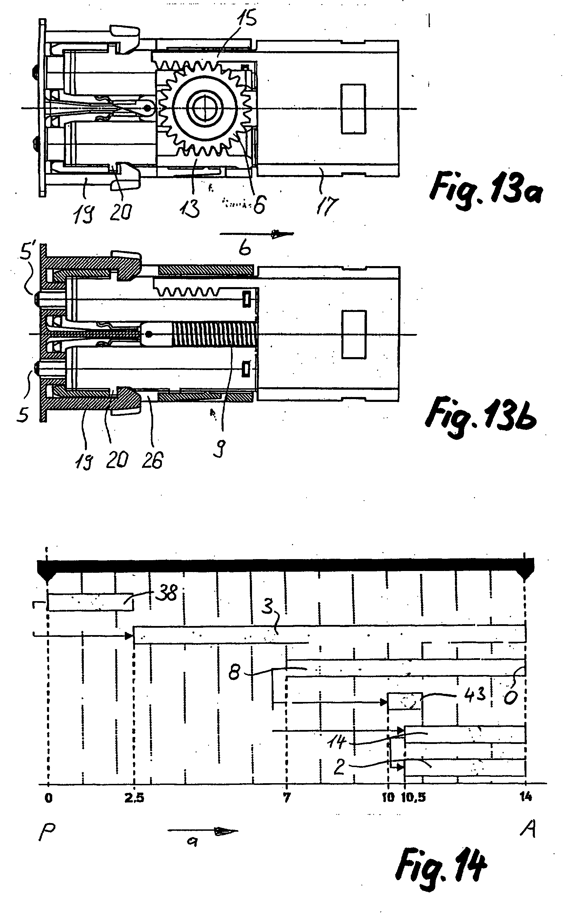

Anhand der Figuren 11a bis 13b wird nachstehend die Bewegung der einzelnen Bauteile genauer dargestellt. Die Figuren 11a und 11b entsprechen dabei einer Passivlage P und die Figuren 13a und 13b einer Aktivlage A. In der Passivlage sind die Klappen 21 in einer Schliessstellung S angeordnet und in der Aktivlage A in einer Öffnungstellung O. Die Figuren 12a und 12b zeigen eine Zwischenstellung.

Wie in den Figuren 11a und 11b dargestellt, greift der Stössel 11 durch die Stösselöffnung 29 an die Schlittenstirnseite 41. Die Position der ersten Zahnstange 13 entspricht dabei derjenigen, wie sie in Figur 8 dargestellt ist. Die Stützklinke 43 ist am Stütznocken 44 abgestützt, so dass eine Krafteinwirkung in Einsteckrichtung a am Stiftgehäuse 17 auch auf das Steckergehäuse 3 übertragen wird.

Beim Einstecken des Steckers 1 wird der Schlitten 8 gegen die Kraft der Schraubendruckfeder 9 durch den Stössel 11 zurückgeschoben, so dass die Klappen 21, 21' beginnen, sich zu öffnen und die Steckerstirnseiten 5, 5' (Figur 4) freizugeben. Die Steckerstifte 2, 2' haben ihre Position innerhalb des Steckergehäuses immer noch beibehalten. Das Zahnstangenende 45 an der ersten Zahnstange 13 drückt jetzt jedoch die Stützklinke 43 nach aussen und löst damit die Verriegelung, so dass sich das Stiftgehäuse 17 relativ zum Steckergehäuse 13 verschieben kann. Die erste Zahnstange 13 beginnt ihren Eingriff mit dem Zahnrad 14. Die Sperrklinken 19, 19' werden nach aussen aufgebogen, wobei sie auf der Aussenseite des Steckergehäuses 3 entlanggleiten.

Im weiteren Verlauf der Bewegung in Einsteckrichtung a wird das Zahnrad 14 gedreht, wobei es sich in der zweiten Zahnstange 15 abwälzt und dadurch das Stiftgehäuse 17 bzw. die Steckerstifte soweit nach vorne schiebt, bis die Steckerstirnseiten 5, 5' über die Gehäusestirnseite 4 hinausragen. Zuletzt wird die in den Figuren 13a, 13b dargestellte Einsteckposition erreicht. Die Sperrklinken 19, 19' sind jetzt durch die Einrastöffnungen 26, 26' hindurch hinter den Sperrleisten 20, 20' eingerastet und halten das Stiftgehäuse 17 gegen den Druck der praktisch auf Block zusammengepressten Schraubendruckfeder fest.

Zum Lösen dieser Verriegelung muss in Aussteckrichtung b ein Zug auf den hier nicht dargestellten Entriegelungsschieber 38 ausgeübt werden. Beim Zurückziehen dieses Schiebers gleiten die Entriegelungsnocken 42 auf die Rampen 40 (Figur 8), so dass die Sperrklinken 19 aus ihrer Eingriffsstellung hinter den Sperrleisten herausgehoben werden und der Stecker 1 insgesamt aus dem Buchsenteil herausgezogen werden kann.

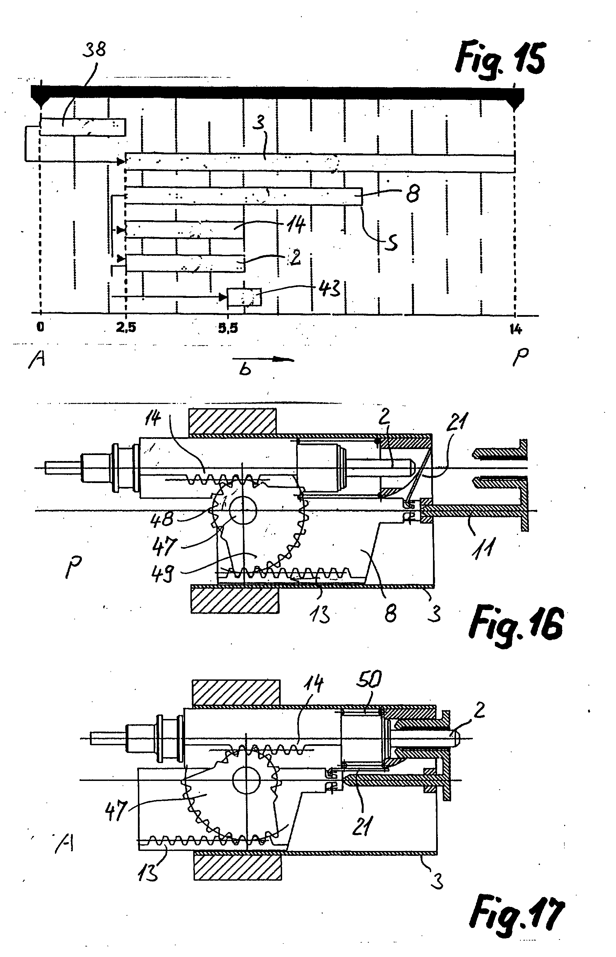

Die einzelnen Bewegungsabläufe in Relation zueinander werden anhand der Figuren 14 und 15 erläutert. Im Diagramm gemäss Figur 14 beträgt der Gesamtweg zwischen der Passivlage P und der Aktivlage A insgesamt 14mm. Beim Einsteckvorgang in Einsteckrichtung a wird zunächst der Entriegelungsschieber 38 um eine Strecke von 2,5mm verschoben. Erst jetzt beginnt der Einsteckweg des Stekkergehäuses 3. Erst nach 7mm Einsteckweg beginnt der Schlitten 8 seine lineare Bewegung, die er allerdings bis zum Erreichen der Aktivlage A fortsetzt. Die Stützklinke 43 beginnt sich nach 10mm Weg zu öffnen und erst jetzt nach ca. 10,5mm beginnt sich das Zahnrad 14 zu drehen, wobei die Steckerstifte 2 ausgefahren werden. Die Ausfahrbewegung wird dabei über das Getriebe mit der Öffnungsbewegung der Klappen koordiniert. Nach dem Einsteckweg von 14mm rasten die Sperrklinken am Buchsenteil ein und der Stecker wird zugfest gehalten.

Beim Ausstecken des Steckers wird zwischen der Aktivlage A und der Passivlage P die gleiche Wegstrecke von 14mm zurückgelegt. Die Reihenfolge der Bewegungen der einzelnen Bauteile ist jedoch unterschiedlich. Zunächst muss wiederum der Entriegelungsschieber 38 um 2,5mm bewegt werden, wobei am Ende dieser Bewegung die Sperrklinken am Buchsenteil befreit werden. Sofort nach dieser Entriegelung beginnt sich auch der Schlitten 8 unter der Einwirkung der Federkraft wieder zu bewegen, wobei das Zahnrad 14 in die Gegenrichtung gedreht wird und die Steckerstifte 2 wieder in das Steckergehäuse 3 einfahren. Nach ca. 5,5mm rastet die Stützklinke 43 ein und verriegelt damit das Stiftgehäuse 17 am Stekkergehäuse 3. Der Schlitten 8 bewegt sich jedoch weiter, wobei auch die Klappen 21 ihre Bewegung in die Schliessstellung S fortsetzen. Bis zum endgültigen Ausstecken legt das Steckergehäuse 3 dann noch einen zusätzlichen Weg von ca. 4,5mm zurück.

In den Figuren 16 und 17 ist stark vereinfacht ein alternatives Ausführungsbeispiel dargestellt, bei dem der Steckerstift 2 ebenfalls über ein Zahnrad-/Zahnstangengetriebe verschoben wird. Der Schlitten 8 wird dabei analog zum vorhergehenden Ausführungsbeispiel über einen Stössel 11 aktiviert. Das Zahnrad 47 verfügt jedoch über einen Zahnradabschnitt 48 mit einem kleinen Teilkreisdurchmesser und über einen Zahnradabschnitt 49 mit einem grösseren Teilkreisdurchmesser. Der Zahnradabschnitt 49 kämmt mit der ersten Zahnstange 13, welche dem Schlitten 8 zugeordnet ist und der kleine Zahnradabschnitt 48 kämmt mit der zweiten Zahnstange 14, welche dem Steckerstift 2 zugeordnet ist. Beide Zahnstangen sind bereits in der Passivlage P mit dem Zahnrad in Eingriff, so dass sich ersichtlicherweise der Steckerstift 2 und die Schutzklappe 21 von Anfang an simultan bewegen. Die unterschiedlichen Teilkreisdurchmesser am Zahnrad 47 bewirken dabei eine Übersetzung, welche den unterschiedlichen Bewegungsweg zwischen Steckerstift 2 und Schutzklappe 21 berücksichtigt.

Figur 17 zeigt die Aktivlage A mit ganz aus dem Steckergehäuse 3 ausgefahrenem Steckerstift 2 und mit geöffneter Schutzklappe 21. Im Gegensatz zum vorhergehenden Ausführungsbeispiel wird im vorliegenden Fall die Vorspannkraft über eine Schraubendruckfeder 50 erzielt, welche direkt über den Steckerstift 2 geschoben ist.

## Patentansprüche

1. Stecker (1) für eine optische Steckverbindung mit wenigstens einem Steckerstift (2, 2'), der in einem Steckergehäuse (3) gelagert ist, das bezogen auf die Einsteckrichtung (a) eine Gehäusestirnseite (4) aufweist, **dadurch gekennzeichnet,**
- **dass** der Steckerstift (2, 2') im Steckergehäuse (3)verschiebbar gelagert ist,
- **dass** wenigstens die Steckerstiftstirnseite (5, 5') im ungesteckten Zustand in einer Passivlage (P) in das Stekkergehäuse hinter die Gehäusestirnseite (4) zurückgezogen ist,
- und **dass** der Steckerstift (2, 2') über ein Getriebe (6) durch eine Ausfahrbewegung in eine Aktivlage (A) bewegbar ist, in welcher die Steckerstiftstirnseite (5, 5') über die Gehäusestirnseite (4) hinausragt,
- wobei das Getriebe (6) ein Getriebeglied (8) aufweist, das vorzugsweise durch Einstecken des Steckers in ein Buchsenteil (7) von der Aussenseite des Steckergehäuses aktivierbar ist.

2. Stecker nach Anspruch 1, **dadurch gekennzeichnet, dass** der Steckerstift (2, 2') unter einer auf das Getriebe einwirkenden Federvorspannung in die Passivlage vorgespannt ist.

3. Stecker nach einem der Ansprüche 1 oder 2, **dadurch gekennzeichnet, dass** im Bereich der Steckerstiftstirnseite (5, 5') innerhalb des Steckergehäuses (3) eine Schutzvorrichtung (10) angeordnet ist, die in einer Öffnungsbewegung aus einer Schliessstellung (S) mit verdeckter Steckerstiftstirnseite (5, 5') in eine Öffnungsbewegung (O) mit freiliegender Stekkerstiftstirnseite bewegbar ist, wobei sich die Schutzvorrichtung in der Passivlage (P) in der Schliessstellung und in der Aktivlage (A) in der Öffnungstellung befindet.

4. Stecker nach Anspruch 3, **dadurch gekennzeichnet, dass** die Öffnungsbewegung der Schutzvorrichtung und die Ausfahrbewegung des Steckerstifts wenigstens teilweise durch das Getriebe koordiniert sind.

5. Stecker nach Anspruch 4, **dadurch gekennzeichnet, dass** die Schutzvorrichtung am aktivierbaren Getriebeglied angeordnet ist.

6. Stecker nach einem der Ansprüche 1 bis 5, **dadurch gekennzeichnet, dass** zwischen dem Steckergehäuse (3) einerseits und dem Steckerstift (2, 2'), bzw. den dem Steckerstift zugeordneten Bauteilen (16, 17) andererseits eine lösbare Verriegelung (43, 44) vorgesehen ist, welche durch Betätigung des Getriebeglieds (8) aufhebbar ist.

7. Stecker nach einem der Ansprüche 1 bis 6, **dadurch gekennzeichnet, dass** das Getriebeglied (8) durch eine Öffnung (29) an der Gehäusestirnseite (4) mit einem Stössel (11) aktivierbar ist.

8. Stecker nach einem der Ansprüche 1 bis 7, **dadurch gekennzeichnet, dass** das aktivierbare Getriebeglied (8) ein in Einsteckrichtung linear verschiebbarer Schlitten ist, der durch einen Stössel (11) am Buchsenteil aktivierbar ist.

9. Stecker nach einem der Ansprüche 3 bis 7 und nach Anspruch 8, **dadurch gekennzeichnet, dass** die Schutzvorrichtung (10) wenigstens eine schwenkbar am Schlitten gelagerte Schutzklappe (21, 21') ist, die im Verlauf der Schlittenbewegung in einer Steuerbahn (12) geführt ist.

10. Stecker nach Anspruch 9, **dadurch gekennzeichnet, dass** er zwei parallele Steckerstifte (2, 2') aufweist, zwischen denen der Schlitten (8) geführt ist, wobei am Schlitten zwei Schutzklappen (21, 21')gegensinnig schwenkbar gelagert sind.

11. Stecker nach einem der Ansprüche 1 bis 10, **dadurch gekennzeichnet, dass** das Getriebe ein Zahnstangen(13, 15)/Zahnrad (14) Getriebe ist.

12. Stecker nach Anspruch 11, **dadurch gekennzeichnet, dass** am Steckergehäuse (3) ein Zahnrad (14) gelagert ist, das einerseits mit einer ersten Zahnstange (13) am aktivierbaren Getriebeglied (8) und andererseits mit einer zweiten Zahnstange (15) an einer dem Steckerstift zugeordneten Stifthalterung (16) bzw. an einem Stiftgehäuse (17) in Eingriff bringbar ist.

13. Stecker nach Anspruch 4 und Anspruch 12, **dadurch gekennzeichnet, dass** zur Koordination der Kinematik zwischen Öffnungsbewegung und Ausfahrbewegung die erste Zahnstange (13) derart dimensioniert ist, dass sie erst nach einer vorbestimmten Linearbewegung mit dem Zahnrad kämmt.

14. Stecker nach Anspruch 4 und Anspruch 12, **dadurch gekennzeichnet, dass** zur Koordination der Kinematik zwischen Öffnungsbewegung und Ausfahrbewegung das Zahnrad Zahnradabschnitte mit unterschiedlichen Teilkreisdurchmessern aufweist, wobei jeder der Abschnitte mit einer der beiden Zahnstangen (13, 15) kämmt.

15. Stecker nach Anspruch 10 und einem der Ansprüche 13 oder 14, **dadurch gekennzeichnet, dass** im Steckergehäuse (3) auf beiden Seiten der beiden parallelen Steckerstifte (2, 2') ein Zahnrad (14, 14') gelagert ist und dass jedes Zahnrad mit je einer ersten und mit je einer zweiten Zahnstange in Eingriff bringbar ist, wobei die ersten und zweiten Zahnstangen bezogen auf eine durch die Drehachse der Zahnräder und parallel zu den Steckerstiften verlaufenden Ebene jeweils wechselseitig angeordnet sind.

16. Stecker nach einem der Ansprüche 1 bis 15, **dadurch gekennzeichnet, dass** der Steckerstift unter axialer Federvorspannung begrenzt verschiebbar in einer Stifthalterung gelagert ist, welche ihrerseits direkt oder indirekt im Steckergehäuse geführt ist.

17. Stecker nach Anspruch 16, **dadurch gekennzeichnet, dass** die Stifthalterung mit einem Stiftgehäuse (17) verbunden ist, das im Steckergehäuse (3) geführt ist.

18. Optische Steckverbindung enthaltend einen Stecker nach einem der Ansprüche 1 bis 17, sowie ein Buchsenteil (7) mit wenigstens einer Buchse (18, 18') zur Aufnahme des Steckerstifts (2, 2'), **dadurch gekennzeichnet, dass** das Buchsenteil ein Betätigungselement (11) aufweist, das beim Einstecken des Steckers (1) mit dem aktivierbaren Getriebeglied (8) zusammenwirkt.

19. Steckverbindung nach Anspruch 18, **dadurch gekennzeichnet, dass** das Betätigungselement wenigstens einen in Einsteckrichtung verlaufenden und über die Eintrittsöffnung der Buchse hinausragenden Stössel (11) aufweist.

20. Steckverbindung nach Anspruch 18 oder 19, **dadurch gekennzeichnet, dass** das Buchsenteil wenigstens ein lösbares Verriegelungselement aufweist, welches zur Sicherung des Stekkers im eingesteckten Zustand mit dem Stecker zusammenwirkt.

21. Steckverbindung nach Anspruch 20, **dadurch gekennzeichnet, dass** das Verriegelungsmittel wenigstens eine Sperrklinke (19, 19') ist, welche hinter einer Sperrleiste (20, 20') am Stecker einrastbar ist und dass die Sperrklinke durch Zug an einem Aussengehäuse nach dem Push-Pull Prinzip lösbar ist.
